# EUROPEAN PATENT APPLICATION

(11) **EP 3 703 211 A1**
(43) Date of publication of application: **02.09.2020**
(21) Application number: 19160028.7
(22) Date of filing: 28.02.2019
(51) Int. Cl.: H02J 3/14

(54) **ESTIMATION OF POWER SUPPLY BY VOLTAGE CHANGE WHILE ACTIVATING LOAD IN A HOUSEHOLD DEVICE**

(71) Applicant: BSH Hausgeräte GmbH, 81739 München (DE)
(72) Inventor: Cabaleiro Martins, Marcelo, 13629 Berlin (DE); Mühl, Jürgen, 10439 Berlin (DE); Neitzel, Thomas, 10785 Berlin (DE)

(57) **Abstract**

A Household appliance (10), suppliable by a home power line, comprises a control circuit (18), controlling the operation of the household appliance, a load demanding component (16) controlled by the control circuit, and a power line monitor (26), connected to the control circuit, and monitoring the power line voltage. The control circuit (18) is configured to, when the power line monitor (26) detects upon activation of the load demanding component (16), a voltage drop dU in the power line, exceeding a predefined limit (ε1, ε2, ε3), to generate a power line error message and/or either switch the load demanding component into a less demanding mode, or end the operation of the household appliance. A method for operating a home power line supplied household appliance (10), comprises the steps of controlling a load demanding component (16) of the household appliance (10) with a control unit (18), monitoring the power line voltage with a power line monitor (26). If the control unit (18) recognizes with the power line monitor (26) a power line voltage drop greater than a predefined amount (ε1, ε2, ε3) when activating the load demanding component (16), the method comprises generating a power line error message, and/or either switching the load demanding component (16) into a less demanding mode, or ending the operation of the household appliance (10).

## Description

The invention relates to a household appliance suppliable by a home power line, comprising a control circuit which controls the operation of the household appliance, comprising a load demanding component, controlled by the control circuit and a power line monitor, connected to the control circuit and monitoring the power line voltage. The invention further relates to a method for operating such a household appliance.

Household appliances such as washing machines, laundry dryers, dishwashers, freezers, but also coffee makers and many other this kind are generally connected to a home power supply, mostly AC power line, 110 - 240 V, 50 or 60 Hz. Such an appliance may impose a considerable load to the power line, once a load-demanding component of the household appliance, e.g. an electric heating, a powerful motor, a compressor etc. is activated.

The performance of a houshold appliance can depend significantly on the stability of the power supply line i.e. the power line voltage staying within a defined boundary.

If the home power line is not sufficiently stable, for example due to a weak power net in general or a poor home installation, in such an instance, the voltage pending at the connection terminals of the appliance may drop to a level that cannot ensure a safe and reliable operation of the appliance any more.

The invention provides a household appliance that can operate securely and reliable even with an unreliable power home supply, and provides a method for reliably and securely operating a household appliance connected to an unreliable power home supply.

The objective of the invention is achieved with a household appliance according to claim 1.

The household appliance is suppliable by a home power line and comprises a control circuit, controlling the operation of the household appliance, a load demanding component controlled by the control circuit and a power line monitor, connected to the control circuit, and monitoring the power line voltage. The control circuit is configured to, when the power line monitor detects upon activation of the load demanding component, a voltage drop in the power line, exceeding a predefined limit, to generate a power line error message and/or either switch the load demanding component into a less demanding mode or end the operation of the household appliance.

When monitoring the voltage supplied from the home power line to the household appliance, the control circuit can detect, if there is a significant voltage drop once the household appliance draws a considerable amount of electrical power from the home power line. A significant voltage drop, i.e. a voltage drop greater than a predefined threshold value, may occur if the home power line is not powerful enough to deliver the necessary electrical power for a safe or/and reliable operation of the household appliance. Such failure of the home power line may result e.g. from a poor installation in the home or the public line or if the home power line depends on a generator or other local power source.

In case of such a failure, upon activation of a load demanding component of the home appliance, i.e. a component which needs more electrical power than other components such as e.g. an electrical heating, a powerful motor for the movement of a drum in a washing machine or a laundry dryer, the home power line net may not be able to keep the voltage pending at the connection to household appliance within the value specified by a standard or the suppliers specification, or even within the household appliance manufacturers specification for safe and/or reliable operation.

Other examples for household appliances which may benefit from the invention include but are not limited to washer-dryers or dishwashers, having an air or water heating as load demanding component, a laundry dryer having a heat-pump compressor as load demanding component, a blender having a motor as load demanding component, etc.

In order to provide a safe and/or reliable operation of the household application, the control circuit will, together with generating a power line error message, switch the load demanding component into a less power demanding mode. The control circuit may even end the operation of the household appliance if the latter cannot not be reliably operated with the load demanding component switched into a less demanding mode or even turned off.

Measures to ensure save and/or reliable operation of the household appliance despite a poor home power line, are to switch the load demanding component into a less demanding mode. Such a less demanding mode may include, but is not limited to, reducing the power consumption of the power demanding component by reducing the speed if the load demanding component is e.g. a motor or a compressor, reducing the heating power if the load demanding component is a heating. Specifically, the heating may comprise two or more heating elements which can be connected in series instead of being connected in parallel to reduce the heating power, or the control unit may connect an inductivity in series with the heating element or the heating elements.

In an advanced embodiment, the control unit is configured to control the power to the load demanding component via pulse width modulation (PWM). This allows the control unit to variably control the load consumption of the load demanding component. Thus the load demanding component may be operated to give maximum performance under the given circumstances.

In another advanced embodiment, where the power line error message includes a warning to the user of the home appliance. Such a warning allows the user to understand why the household appliance will not perform as expected and may give him a chance to abort the operation or chose another operation mode.

In another advanced embodiment, the power line error message includes an event stored in the error memory, to be read out by service personnel. Such an event can provide valuable information for service personnel where to find a cause if the household appliance is alleged to not perform as expected.

In another advanced embodiment, the household appliance is equipped with a network connection to send the error message to service personnel. Such a configuration provides a possibility for diagnosis without service personnel to be called to the site where a household appliance is installed. The customer can save effort and money if he is told to have his home power installation checked rather than his household appliance.

The objective of the invention is further achieved with a method according to claim 7.

The Method for operating a home power line supplied household appliance, comprising the steps of controlling a load demanding component of the household appliance with a control unit, monitoring the power line voltage with a power line monitor. If the control unit recognizes with the power line monitor a power line voltage drop greater than a predefined amount (ε1, ε2, ε3) when activating the load demanding component, a power line error message will be generated, and/or either the load demanding component is switched into a less demanding mode, or the operation of the household appliance is ended.

According to an advanced method, controlling the load demanding component includes controlling the power to the load demanding component via pulse width modulation (PWM). The load demanding component can thus be controlled variably with regard to the available power from the home power line. By doing so, the load demanding component can give maximum performance without exposing the household appliance to risk.

According to a further advanced method, generating the power line error message includes storing an event in an error memory of the household appliance. If the user or service personnel eventually searches for the reason why the household appliance is not performing as expected, e.g. because a process takes longer than expected or results have deteriorated, the error memory provides a hint to search the cause not in the household appliance but to check the home power line installation.

According to a further advanced method generating the power line error message includes sending the error message to a mobile device of the user and or displaying the error message on a display of the household appliance. This enables the user to understand why the operation of his household appliance may take longer than expected or why a different operation is being executed. It may also be possible, to provide the user with a possibility to select another operation process or to abort the operation of the current process.

If the control unit has determined a significant voltage drop that indicates a poor power line installation, it will perform measures to prevent events that may lead to a poor result in operation of the washing machine or even a hazardous outcome.

Further advantages and features of the invention result from the subclaims and the following description with reference to the attached figure. The figure shows a schematic diagram of a washing machine according to embodiments of the invention further detailed in the following description.

The household appliance according to a first embodiment of the invention and shown in the figure is represented in form of a washing machine 10 having a housing 12. The washing machine 10 comprises further a tub 14 for receiving laundry to be cleaned, a heating unit 16 for heating water intended for cleaning the laundry in the tub 14, a control circuit 18 to control the operation of the washing machine 10 and a user interface 20 including a display 28 for user interaction. The washing machine 10 may comprise further elements that are commonly known to be part of a washing machine but are not depicted in the figures because they are not necessary to understand the invention.

The heating unit 16 is controlled by the control circuit 18. The heating unit 16 has a maximum power consumption of approximately 1000 W, which qualifies the heating unit 16 as a load demanding component of the household appliance. The heating unit 16 can be controlled by the control unit 18 with pulse width modulation (PWM) in order to provide variable heating power to the washing machine 10.

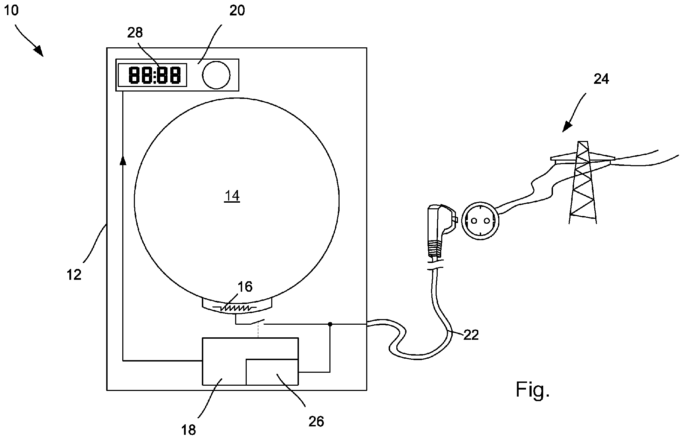

The washing machine 10 is connected via a power connection line 24 to a 230V AC mains power supply 24, which is depicted symbolically in Figure 1.

A power line monitor 26 is implemented in the control circuit 18 for monitoring the mains power supply 24. Monitoring here means that the voltage from the mains power supply 24 is measured and compared with a reference value U_{ref}. The reference value U_{ref} may be predetermined, according to a standard for the power supply line, or it may be measured by the power line monitor 26 while the load demanding unit is still switched off and stored in the control unit 18.

In the following, the function of the household appliance 10 is described with regard to the characterizing features of the invention.

At some point during the operation of the washing machine 10, it is necessary to activate the heating unit 16 in order to warm up some water in the tub of the washing machine 10. The activation of the heating unit 16 is executed in this embodiment in that the control unit 12 supplies the heating unit 16 with electrical power from the power supply 24. The heating unit 16 can be controlled by the control unit 18 in a way that the power consumption of the heating unit and thus the heat dissipated by the heating unit 16 is variable, depending on the program course selected by the user.

During all of these operation steps, the mains power supply 24 is monitored by the control unit. This means in particular that the voltage of the mains power supply 24 is measured before and after the heating unit 16 is activated. Thus, the control circuit 18 collects at least one measured voltage value U₀ for the voltage of the mains power supply 24 before activating the heating unit 16. The measured voltage value U₀ for the voltage of the mains power supply 24 before activating the heating unit 16 is stored as a reference value U_{ref}.

The control circuit 18 collects at least another measured voltage value U₁ for the voltage of the mains power supply 24 when the heating unit 16 is activated. The control unit 12 then compares the measured voltage values U₁ to the reference value U_{ref}. If U₁ is significantly lower than the reference value U_{ref} which means that the difference dU is greater than a first predefined threshold value ε₁, then the control unit 12 recognizes an important voltage drop due to the load imposed on the mains power supply 24 by activation of the heating unit 16. Such a voltage drop indicates a faulty or poor installation in the mains power supply 24, which may have an impact on the operation of the washing machine or the load imposed by the heating unit 16 has a substantial impact on the mains power supply 24.

In order to provide a secure operation of the washing machine, despite having recognized such a voltage drop, the control circuit 18 needs to perform one or plural measures. In the present embodiment, there are a number of predefined measures to be taken according to the amount of the voltage drop dU.

A first, tolerance threshold value ε₁ for the voltage drop dU is predefined to be the maximum voltage drop value which is considered to be not substantially affecting the selected operation course of the washing machine. This means that until the voltage drop dU exceeds this tolerance threshold value ε₁, the operation of the washing machine can be continued without the need to perform any further measures.

If the voltage drop dU exceeds the first predefined threshold value ε₁, the correspondent measure to be taken by the control circuit 18 is to store in the error memory of the machine an event, eventually to be read out by service personnel or to be sent to a remote server via a network connection. Thus, if the user complains about a poor result from the appliance, service may be able to identify the probable cause in the installation of the mains power supply. As further measures, the control unit may amend the process time of the selected washing course accordingly if possible. Additionally, a message to the operator of the machine may be provided, informing him of the longer duration for the washing process. Additionally, the operator could be given the opportunity to select another washing course.

In a second embodiment of the invention, further measures are taken as a reaction to the voltage drop dU exceeding the first predefined threshold value ε₁. Such measure includes additionally prolonging parts of the washing course, in order to either reach the temperature intended for the selected course or to achieve satisfying washing results without reaching the intended temperature for that course. Advantageously, a warning to the user will be displayed, informing him of the longer washing time. An event is stored in the error memory, eventually to be read out by service personnel.

In a third embodiment of the invention, a second threshold value ε₂ for the voltage drop dU is predefined to be the maximum voltage drop value for the washing machine to operate safely and satisfactory under further restrictions. This means that the power supply is sufficient for a safe operation of the washing machine and the selected operation course provides a satisfactory result if the process time for the washing process is equivalently prolonged. However, if the voltage drop dU exceeds the second threshold value ε₂ upon operating the heating, the remaining power supply voltage is not sufficient to safely operate the washing machine and/or does not provide a satisfactory result even if the process time for the washing process is equivalently prolonged.

In such a case, the control circuit 18 will control the heating unit 16 in a way, that the power consumption of the heating unit is reduced. In the present embodiment, the control unit 18 reduces the PWM duty cycle in order to reduce the power consumption of the heating unit 16. Further, a part of the washing course will be prolonged, in order to either reach the temperature intended for the selected course or to achieve satisfying washing results without reaching the intended temperature for that course. Advantageously, a warning to the user will be displayed, informing him of the longer washing time and giving him a chance to select another washing course. An event is stored in the error memory, eventually to be read out by service personnel and be sent to a remote server via a network connection if available.

In a fourth embodiment, a third treshold value ε₃ is predefined to be the maximum voltage drop value for the washing machine to operate safely and satisfactory if the power consumption of the heating unit 16 is reduced by the control unit 18 and /or the process time of the washing process is prolonged. If the voltage drop dU upon normal operation of the heating unit exceeds the third treshold value ε₃, the remaining power supply voltage is not sufficient for a safe operation of the washing machine and/or cannot provide a satisfactory result even if the power consumption of the heating unit 16 may be reduced by the control unit 18. In such a case, the selected washing course will be aborted, a warning to the user will be displayed, informing him of the longer washing time and giving him a chance to select another washing course. An event is stored in the error memory, eventually to be read out by service personnel be sent to a remote server via a network connection if available.

## Claims

1. Household appliance (10), suppliable by a home power line, comprising
- a control circuit (18), controlling the operation of the household appliance
- a load demanding component (16) controlled by the control circuit, and
- a power line monitor (26), connected to the control circuit (18), and monitoring the power line voltage,
**characterized in that**
the control circuit (18) is configured to, when the power line monitor (26) detects upon activation of the load demanding component (16), a voltage drop dU in the power line, exceeding a predefined limit (ε₁, ε₂, ε₃), to
- generate a power line error message and/or
- either switch the load demanding component (16) into a less demanding mode or
- end the operation of the household appliance (10).

2. Household appliance (10) according to claim 1, where the control unit (18) is configured to control the power to the load demanding component (16) via pulse width modulation (PWM).

3. Household appliance (10) according to claims 1 or 2, where the power line error message includes a warning to the user of the home appliance (10).

4. Household appliance (10) according to one of claims 1 to 3, where the power line error message includes an event stored in the error memory, to be read out by service personnel.

5. Household appliance (10) according to one of claims 1 to 4, where the household appliance is equipped with a network connection to send the error message to service personnel.

6. Household appliance (10) according to one of the preceding claims, where the household appliance is a washing machine, a dryer or a washer-dryer.

7. Method for operating a home power line supplied household appliance (10), comprising the steps of
- controlling a load demanding component (16) of the household appliance (10) with a control unit (18),
- monitoring the power line voltage with a power line monitor (26), and
**characterized in that**
- if the control unit (18) recognizes with the power line monitor (26) a power line voltage drop greater than a predefined amount (ε₁, ε₂, ε₃) when activating the load demanding component (16),
a) generating a power line error message, and/or
b) either switching the load demanding component (16) into a less demanding mode, or
c) ending the operation of the household appliance (10).

8. Method according to claim 7, where controlling the load demanding component (16) includes controlling the power to the load demanding component (16) via pulse width modulation (PWM).

9. Method according to claim 7 or 8, where generating the power line error message includes storing an event in an error memory of the household appliance (10).

10. Method according any of claims 7 to 9, where generating the power line error message includes sending the error message to a mobile device of the user and or displaying the error message on a display (28) of the household appliance (10).
